# EUROPEAN PATENT APPLICATION

(11) **EP 4 391 275 A1**
(43) Date of publication of application: **26.06.2024**
(21) Application number: 22383255.1
(22) Date of filing: 22.12.2022
(51) Int. Cl.: H02J 3/50, H02J 3/38, F03D 7/02

(54) **OPERATING A WIND TURBINE TO PROVIDE REACTIVE POWER**

(71) Applicant: Siemens Gamesa Renewable Energy Innovation & Technology S.L., 31621 Sarriguren (Navarra) (ES)
(72) Inventor: Tapia Pascal, Mikel, 31012 Pamplona (ES); Tomey Lopez, Estanislao Pablo, 31110 Noain (ES)
(74) Representative: SGRE-Association

(57) **Abstract**

A method of operating a wind turbine is provided. The wind turbine (100) comprises a wind turbine rotor (101) and an electrical power system (103) including a doubly-fed induction generator (104) mechanically coupled to the wind turbine rotor, wherein the electrical power system is configured to exchange electrical power with a power grid (112). The method comprises obtaining a grid requirement for the wind turbine (100) to exchange reactive power with the power grid (112), wherein providing the reactive power in accordance with the grid requirement by the electrical power system (103) requires the electrical power system to consume an active power amount. The method further comprises providing, by the electrical power system (103), the reactive power in accordance with the grid requirement to the power grid (112) while consuming the active power amount. The providing of the reactive power includes supplying the electrical power system (103) with the required active power amount, wherein the wind turbine (100) is operated such that the electrical power system does not deliver active power to the power grid (112), and operating the generator (104) as a variable-speed rotating condenser to provide at least a part of the reactive power to the power grid (112).

## Description

### FIELD OF THE INVENTION

The present invention relates to a method of operating a wind turbine. It further relates to a computer program for performing such method and a control system configured to carry out such method.

### BACKGROUND

For a power grid to operate efficiently, voltage stability is essential and thus grid voltage must be maintained at a suitable and stable level by voltage regulation. This is especially important when the grid-connected power plants are highly scattered, when the connected power plants include renewable-energy power plants, and/or in the case of a weak grid, the voltage and frequency of which react sensitively to distortions and load changes.

To maintain grid voltages at a suitable and stable level, reactive power may be supplied by the grid-connected power plants, e.g. by wind power plants, which stabilize the voltage by providing reactive power. The reactive power is for example provided in response to a reactive power grid requirement received from a grid operator, e.g. from a transmission system operator.

However, a capability of a wind turbine of a wind power plant to provide reactive power may not be available or may be limited when the wind turbine is idle or operated with a low power output, e.g., during curtailment or in the case of low wind.

Therefore, reactive power compensation units, for example static classical compensators like capacitor banks (e.g., for generating reactive power) or inductance banks (e.g., for consuming reactive power) and for example synchronous compensators/synchronous condensers, may be used to provide reactive power for grid stabilization. However, the use of the static classical compensators has the disadvantage of discontinuous and rather low control capacity. A synchronous condenser may be coupled to a grid as a stand-alone system. However, the implementation is expensive and of higher effort since it requires additional hardware.

According to another solution of providing reactive power, a grid side connected converter of a wind turbine is employed to provide reactive power by operating the converter in a static synchronous compensator (STATCOM) mode. Based on the topology of the wind turbine, the reactive power capability of the wind turbine in the STATCOM mode may however be limited to a minority of the rated apparent power of the wind turbine.

Moreover, wind power plants may be equipped with an additional auxiliary power source to provide reactive power in a situation of low power output. However, such auxiliary systems may be expensive and their installation may require high effort.

### SUMMARY

Accordingly, there is the need to mitigate at least some of the drawbacks mentioned above and to provide an efficient and increased reactive power capability of a wind turbine in a low wind situation, the provision being in particular associated with lower costs and/or effort.

This need is met by the features of the independent claims. The dependent claims describe embodiments of the invention.

According to an aspect of the invention, a method of operating a wind turbine is provided. The wind turbine comprises a wind turbine rotor and an electrical power system including a doubly-fed induction generator mechanically coupled to the wind turbine rotor, wherein the electrical power system is configured to exchange electrical power with a power grid. The method comprises obtaining a grid requirement for the wind turbine to exchange reactive power with the power grid, wherein providing the reactive power in accordance with the grid requirement by the electrical power system requires the electrical power system to consume an active power amount. The method further comprises providing, by the electrical power system, the reactive power in accordance with the grid requirement to the power grid while consuming the active power amount. The providing of the reactive power includes supplying the electrical power system with the required active power amount, wherein the wind turbine is operated such that the electrical power system does not deliver active power to the power grid, and operating the generator as a variable-speed rotating condenser to provide at least a part of the reactive power to the power grid.

Operating the doubly-fed induction generator (DFIG) of a DFIG wind turbine as a variable-speed rotating condenser/compensator (also referred to as doubly-fed induction (DFI) condenser/compensator or as doubly-fed induction reactive power compensator) in a low wind situation is beneficial.

The topology of the DFIG wind turbine allows the operation as the DFI condenser to provide the required reactive power without the need of additional hardware and does not require a modification of the system topology using additional hardware before such operation is performable. In contrast, operating an electrical excited synchronous generator of a full converter wind turbine as a synchronous condenser, for example, requires additional hardware and the modification of the system topology before the operation as synchronous condenser is performable. The additional hardware of the full converter wind turbine comprises a clutch for decoupling the generator shaft from the drive train, a bypassing electrical circuit to connect the stator of the synchronous generator directly to the power grid and a suitable automatic voltage controller for the generator rotor excitation.

Moreover, the DFI condenser operates at variable speed (asynchronous or synchronous) while the synchronous condenser only operates at synchronous speed. Accordingly, decoupling the wind turbine rotor from the generator and, thus, a clutch for the decoupling is further not required. Moreover, bypassing the power converter is not required.

Therefore, the effort of hardware and the effort of implementation of the hardware may be reduced. The reduced hardware may be accompanied with an increased system reliability and, thus, a reduced maintenance effort (which is especially relevant for offshore wind turbines). Consequently, costs may be reduced.

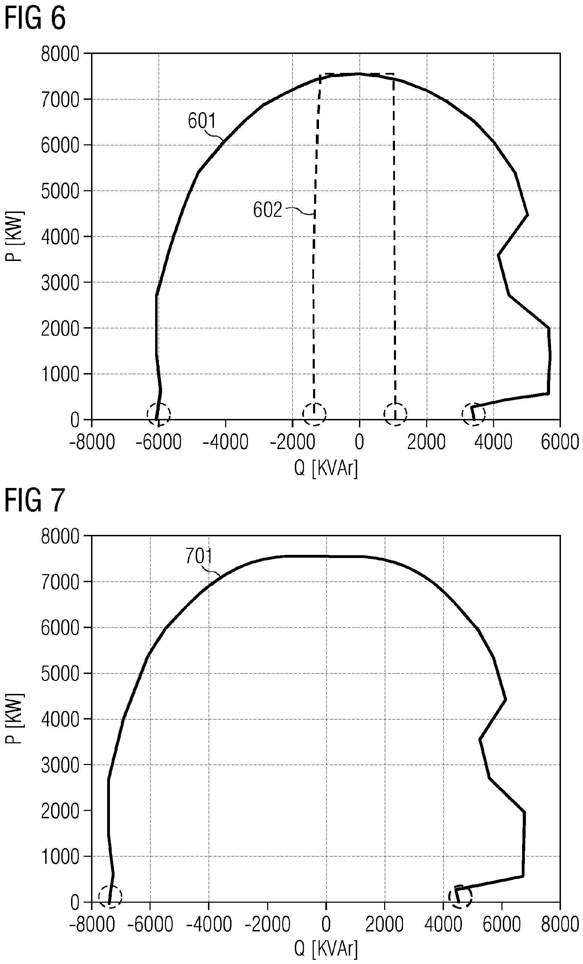

Moreover, the reactive power capability of the wind turbine may be increased to approximately three times compared to a capability of a wind turbine to provide negative or positive reactive power when only the converter is operated in STATCOM mode. Figure 6, discussed in more detail below, exemplarily shows a diagram which illustrates the increased reactive power capability of a DFIG wind turbine when the generator is operated as DFI condenser.

Since all DFIG wind turbines connected to a power grid may operate as a DFI compensator and are easily retrofittable (e.g., since no additional hardware is required), the grid stability may be improved due to a highly increased number of reactive power sources. In contrast, only synchronous generators with an excitable rotor are operable as a synchronous condenser (permanent magnet synchronous generators are not suitable for synchronous condenser operation) and, as mentioned, for their operation as synchronous condenser additional hardware is required. Accordingly, the number of the additional reactive power compensation units (e.g., the static classical compensators or stand-alone synchronous compensators/synchronous condensers) may be reduced.

The provided reactive power may include negative or positive reactive power. Negative reactive power may be generated, i.e. injected/supplied to the power grid. Positive reactive power may be absorbed from the power grid. Providing reactive power (to the power grid) may also be referred to as exchanging reactive power (with the power grid).

The reactive power in accordance with the grid requirement may be provided when the generator is synchronized with the power grid and optionally, when the electrical power system is energized.

The electrical power system may comprise a power converter that is configured to convert the electrical power exchanged with the power grid.

The power converter may comprise a grid side converter and a rotor side converter. The power converter may comprise a DC-link. The power converter may be configured to convert alternating current into direct current and vice versa, or AC to AC. An example for such power converter may be a frequency changer and in particular an AC/DC-DC/AC converter.

It should be clear that the power converter may be capable of bidirectionally transfer of electrical power from the rotor side to the grid side and from the grid side to the rotor side, and may further be capable of imposing a current and/or voltage on each phase of the rotor side and/or of the stator side.

Operating the generator as a variable-speed rotating condenser to provide the at least part of the reactive power may comprise controlling a rotor current of the generator (e.g., a rotor excitation current), in particular by setting at least one of a frequency, an amplitude and a phase angle of the rotor current, to control a (internal) stator voltage of the generator, e.g. by means of the power converter suitable for providing the at least part of the reactive power (at grid voltage and frequency). Preferably, the stator voltage may be further suitable for providing at least a part of required active power.

The wind turbine may be operated such that the electrical power system does not deliver active power to the power grid during the supply of the electrical power system with the required active power amount. In particular, the wind turbine does not deliver active power to the power grid during the supply of the electrical power system with the required active power amount.

According to an example, the reactive power in accordance with the grid requirement may be provided when a wind speed at the wind turbine is below or close to a cut-in wind speed of the wind turbine. Preferably, the wind speed may be close to the cut-in wind speed when the wind speed differs from the cut-in wind speed below 10, 5 or even 3 percent of the cut-in wind speed.

Additionally or alternatively, the reactive power in accordance with the grid requirement may be provided when the wind turbine generates active power in an area close to zero. Preferably, the generated active power may be in the area close to zero when the generated active power is below a (predetermined) threshold (e.g. in a low wind situation or in idle mode), the threshold being in particular below 10, 5 or even 3 percent of a rated apparent power of the wind turbine.

According to an example, the active power amount may comprise an amount of active power that is required to compensate electrical power that is dissipated when the providing of the required reactive power is performed. Preferably, the electrical power may be at least dissipated by the electrical power system, in particular by the generator and/or by a converter of the electrical power system, and/or during rotation of the wind turbine rotor, in particular by a mechanical drive train that mechanically couples the wind turbine rotor with the electrical power system, and/or by one or more ancillary systems of the wind turbine.

The mechanical drive train may or may not comprise a gearbox.

According to an example, the electrical power system may comprise the power converter that is configured to convert the electrical power exchanged with the power grid. The generator operated as the condenser may provide a part of the reactive power. The method may comprise operating at least a part of the power converter as a flexible alternating current transmission system (FACTS), in particular as a static synchronous compensator (STATCOM), to provide at least a part of the required reactive power to the power grid or to provide the remaining part of the reactive power to the power grid. Preferably, the power converter may comprise a grid side converter and a rotor side converter. The at least part of the power converter may include the grid side converter.

By combining the operation of the generator as variable-speed rotating condenser with the operation of the power converter as STATCOM, the reactive power capability of the wind turbine is further increased. Figure 7, discussed in more detail below, exemplarily shows a diagram which illustrates the further increased reactive power capability of a DFIG wind turbine that combines STATCOM operation of the power converter and DFI condenser operation of the generator. By the combination, the reactive power capability may be further increased to approximately four times of the capability to provide negative or positive reactive power when only the converter is operated as a STATCOM.

It should be clear that when herein an operation of the power converter as a STATCOM or when herein an STATCOM mode of the power converter is described, the converter may alternatively be operated as a flexible alternating current transmission system that is different from a STATCOM.

In an example, the (total) reactive power may be provided by the power converter and/or the generator.

According to an example, the electrical power system may comprise the power converter that is configured to convert the electrical power exchanged with the power grid. The exchanged reactive power may be provided by both the generator and the power converter in accordance with a respective maximum reactive power capability. Preferably, the respective maximum reactive power capability may be adjusted based on one or more operating conditions of the generator and/or of the power converter.

The operating conditions of the generator and/or of the power converter may for example comprise at least one of a temperature, a voltage, in particular a voltage magnitude, voltage frequency and/or voltage phase angle, and a current, in particular a current magnitude, current frequency and/or a current phase angle.

The adjustment may allow to align the providing of the required reactive power with the current operating situation of the wind turbine. This way, the adjustment may for example balance loads between both the generator and the power converter and, thus, may reduce fatigue, wear and tear of the components and may extend their lifetime.

According to an example, the method may comprise operating the wind turbine in an operational mode. Operating in the operational mode may comprise generating, by the generator and from rotational mechanical power provided by the wind turbine rotor, active power to supply the electrical power system with at least a part of the required active power amount. Preferably, the total active power amount may be generated by the generator.

In other words, the electrical power system may consume the generated active power to provide the reactive power in accordance with the grid requirement. Instead of decoupling the wind turbine rotor, the wind turbine generates the at least part of the required active power amount in the low wind situation. Using the active power generated from wind power, for example, losses of the electrical components may be compensated and the active power consumed by the wind turbine ancillary systems may be supplied. Thus, less or none of the required active power amount must be consumed from an external active power source (e.g., from the power grid), which may improve the efficiency of the wind turbine and may reduce costs.

Providing the reactive power, in particular operating in the operational mode, may comprise controlling a rotational speed of the wind turbine rotor or of a generator rotor of the generator such that the wind turbine rotor or the generator rotor rotates at a speed within a predetermined speed range. Preferably, the electrical power system may comprise the power converter that is configured to convert the electrical power exchanged with the power grid and the predetermined speed range may be set such that a voltage at the power converter is within an operational voltage range of the power converter. More preferably, the speed range may comprise a lower limit that causes the generator rotor to rotate above 50 percent or above 60 percent of a synchronous rotational speed of the generator and/or the speed range may comprise an upper limit that causes the generator rotor to rotate below 160 percent or below 150 or even 130 percent of the synchronous rotational speed of the generator.

The voltage at the power converter may be a voltage on a rotor side and/or grid side of the power converter.

The speed within the predetermined speed range may be a fixed speed. In other words, the rotational speed of the wind turbine rotor or of the generator rotor may be controlled such that the rotor rotates continuously at the fixed speed while operating in the operational mode.

In some examples, rotating the wind turbine rotor or the generator rotor at the speed within the predetermined range may require consuming active power from the power grid (e.g., when wind speed is not high enough).

According to an example, the operational mode may be a first operational mode in which the generator generates a part of the required active power amount. Operating the wind turbine in the first operational mode may further comprise supplying the remaining part of the required active power amount to the electrical power system from, in particular only from, the power grid. Preferably, the wind turbine may further be operable in a second operational mode in which the generator generates the total required active power amount.

Operating the wind turbine in the first operational mode may improve grid stability, since the wind turbine may provide reactive power even in a situation in which the wind speed is that low that the generator cannot provide the total active power amount. In other words, a continuous reactive power capability of the wind turbine with higher independence on the wind speed may be provided. Further, this may be achieved without further hardware, e.g. auxiliary active power sources and/or clutches, and, thus, hardware costs may be reduced.

Operating the wind turbine in the first operational mode may further comprise stopping the operation of the wind turbine in the first operational mode if the consumption of the remaining part of the required active power amount from the power grid rises above a respective, in particular predetermined, threshold and/or if a monitored parameter indicative of wind speed at the wind turbine falls below a respective, in particular predetermined, threshold (e.g., when the wind speed is not high enough to maintain the controlled rotational speed of the wind turbine rotor).

For this and other purposes, active power consumed from the power grid may be monitored (besides the reactive power exchanged with the grid), e.g. by monitoring a voltage and/or a current exchanged with the power grid. In another example, the consumption of active power may be derived from a difference of the required active power amount and active power provided by the electrical power system. The active power provided by the electrical power system may be monitored, e.g. by monitoring at least one of a rotational speed of the wind turbine rotor, a rotational speed of the generator, a generator torque, a current of the generator and a voltage of the generator.

Monitoring may for example be performed - but is not limited to - by means of at least one of a sensor, a sensing system, a model, in particular a mathematical and/or physical model, being implemented in software, and a filter based monitoring system, which may for example be a state observer, Kalman filter or the like. The result of monitoring a parameter may be a signal of the monitored parameter, e.g., a discrete or continuous signal that indicates a progression of the monitored parameters by plural values generated by the monitoring. Monitoring may further comprise signal pre- and postprocessing, e.g. filtering. Further, monitoring may utilize information obtained from hardware, e.g. one or more sensors, that is implemented for the purpose of monitoring and/or may utilize information obtained from hardware that is implemented for another purpose. Monitoring may further comprise an estimating and/or predicting, preferably based on obtained information.

For example, the threshold for the consumption of the remaining part of the required active power amount from the power grid may be above 60, 70, or even 80 percent of the required active power amount and/or the threshold for the wind speed may be lower than 50, 40, or 30 percent of the cut-in wind speed of the wind turbine.

In an example, stopping the operation of the wind turbine may comprise stopping the providing of the reactive power in accordance with the grid requirement of at least a part of the electrical power system, in particular of the generator. Preferably, when the wind turbine is stopped, the operation of the at least part of the power converter as FACTS, in particular STATCOM, may be continued to provide at least a part of the required reactive power.

The stopping may ensure that the wind turbine consumes only a limited amount of active power from the power gird to provide the required active power amount. For example, when the wind speed is low, the stopping may prevent that the wind turbine is merely operated/drived as a fan to maintain the rotational speed/rotor speed of the wind turbine. This way, the efficiency of the reactive power provision in accordance with the grid requirement may be improved. Moreover, by the stopping, the costs for operating the wind turbine may be reduced.

According to an example, the wind turbine may comprise a clutch configured to mechanically decouple the wind turbine rotor and/or a drive train that is arranged between the wind turbine rotor and the generator from the generator. Operating the wind turbine in the first operational mode may further comprise decoupling the wind turbine rotor and/or the drive train from the generator if the consumption of the remaining part of the required active power amount from the power grid rises above a respective, in particular predetermined, threshold and/or if a monitored parameter indicative of wind speed at the wind turbine falls below a respective, in particular predetermined, threshold. Preferably, operating the wind turbine in the first operational mode may further comprise, after the decoupling, continuing the operation of the wind turbine in a further different operational mode in which the power grid supplies the electrical power system with the total required active power amount.

For example, the threshold for the consumption of the remaining part of the required active power amount from the power grid may be above 60, 70, or even 80 percent of the required active power amount and/or the threshold for the wind speed may be lower than 50, 40, or 30 percent of the cut-in wind speed of the wind turbine.

The clutch may for example be arranged between a gear box of the mechanical drive train and the generator.

Since the wind turbine rotor is decoupled, the required active power amount to provide the reactive power in accordance with the grid requirement and, thus, the active power amount that is consumed from the power grid may be reduced while the providing of the reactive power in accordance with the grid requirement may be maintained. Accordingly, the efficiency and continuity of the reactive power capability of the wind turbine may be improved.

Operating in the further different operational mode may comprise accelerating a rotor of the generator to a predetermined rotational speed.

In another example, an operation of the wind turbine after the stopping may be associated with a third operational mode and operating the wind turbine in the further different operational mode may be associated with a fourth operational mode of the wind turbine. The method may comprise operating the wind turbine in the third and fourth operational mode.

The implementation of both the third and fourth operational mode may be beneficial since the benefits of the modes may be combined.

The active power threshold and/or wind speed threshold associated with the third operational mode may be different from the active power threshold and/or wind speed threshold associated with the fourth operational mode, respectively. For example, the thresholds may be set such that the fourth operational mode is performed before the third operational mode.

This way, the operation of the generator in DFI condenser mode, in which the wind turbine provides a greater amount of reactive power capability, may be prolonged.

The operation in the third and/or fourth operational mode may comprise stopping the wind turbine rotor.

In an example, the power grid may be an island grid or microgrid. A continuous provision of reactive power to such type of grid, even in a low wind situation, is especially important to maintain grid stability, since only a rather small number of wind turbines or other power source is connected to such grid which may make its voltage and frequency sensitive to distortions and load changes, i.e. the grid voltage may be unstable (or prone to flicker) and/or the frequency may be unstable (e.g., due to a high system impedance).

According to an example, operating in the operational mode may comprise receiving at least a part of the active power amount from the power grid. The method may further comprise, upon detecting that an operation of the wind turbine in a different further operational mode requires less consumption of active power from the power grid in order to provide the reactive power to the power grid, switching from the operational mode to the further operational mode. Preferably, the detection may be based on one or more monitored parameters, the one or more parameters in particular comprising a parameter indicative of wind speed at the wind turbine. Additionally or alternatively, the detection may be based on an estimation of the required consumption of active power from the power grid in the different further operational mode, the estimation being in particular performed by employing a model that implements the operation of the wind turbine in the different further operational mode.

After switching from the operational mode to the different further operational mode, operating in the further operational mode may comprise upon detecting that the operation of the wind turbine in the operational mode requires less consumption of active power from the power grid in order to provide the reactive power to the power grid, switching back from the different further operational mode to the operational mode. Preferably, the detection may be based on one or more monitored parameters, the one or more parameters in particular comprising a parameter indicative of wind speed at the wind turbine. Additionally or alternatively, the detection may be based on an estimation of the required consumption of active power from the power grid in the operational mode, the estimation being in particular performed by employing a model that implements the operation of the wind turbine in the operational mode.

This way, it may be ensured that the wind turbine is operated in the operational mode that requires least active power to provide the reactive power in accordance with the grid requirement and, thus, the efficiency of the wind turbine may be improved.

According to an example, the method may comprise, upon detecting that the wind turbine provides or is capable of providing more active power than the required active power amount, pitching one or more (in particular three or all) rotor blades of the wind turbine rotor. Preferably, the detection may be based on a monitored parameter that is indicative of at least one of a wind speed at the wind turbine, a rotational speed of the wind turbine rotor and/or of the generator rotor, a voltage of the wind turbine and a current of the wind turbine.

The pitching of the one or more rotor blades may in an example be performed synchronously.

The method may further comprise, before the pitching, obtaining a grid requirement for the wind turbine not to output active power to the power grid.

By pitching, the rotational speed of the wind turbine rotor may be controlled such that the speed of the wind turbine rotor is within the predetermined speed range.

The pitching may limit the amount of active power that is consumed from the power grid in order to keep the rotational speed of the wind turbine rotor within the predetermined speed range, even at higher winds, but without providing active power from the wind turbine to the power grid (e.g., in response to the obtained active power grid requirement). Therefore, the efficiency of providing the reactive power in accordance with the reactive power requirement may be further improved and costs for active power consumption from the grid may be reduced.

According to an aspect of the invention, a control system for controlling an operation of a wind turbine is provided. The wind turbine comprises a wind turbine rotor and an electrical power system including a doubly-fed induction generator mechanically coupled to the wind turbine rotor. The electrical power system is configured to exchange electrical power with a power grid. The control system may for example include a processing unit and a memory unit, the memory unit storing control instructions which when executed by the processing unit of the control system, cause the control system to perform any of methods described herein. The processing unit may for example include a digital signal processor, an application specific integrated circuit, a field programmable gate array, a microprocessor or the like. The memory unit may include RAM, ROM, Flash Memory, a hard disk drive and the like.

The wind turbine may include or may not include the control system and/or the control system may be located at a site at which the electrical power system is located or at a site that is different from the site at which the electrical power system is located.

According to an aspect of the invention, a wind turbine is provided. The wind turbine comprises a wind turbine rotor and an electrical power system including a doubly-fed induction generator mechanically coupled to the wind turbine rotor. The wind turbine is configured to be operated according to any of the methods described herein.

The wind turbine may include a mechanical drive train that mechanically couples the wind turbine rotor with the electrical power system. Preferably, the drive train comprises a gearbox and/or a clutch.

The wind turbine may be an offshore or onshore wind turbine.

According to an aspect of the invention, a computer program for controlling an operation of a wind turbine is provided. The computer program comprises control instructions which, when executed by a processing unit of a control system controlling the operation of the wind turbine, cause the processing unit to perform any of the methods described herein. The computer program may be provided on a volatile or nonvolatile storage medium or data carrier.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

It should be clear that all method features or functional features are without limitation applicable as a feature in isolation, as a combination of features, or in any sub-combination in a device or system described herein and are disclosed hereby. Likewise, all device or system features or structural features are without limitation applicable as a feature in isolation, as a combination of features, or in any sub-combination to a method described herein and are disclosed hereby.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing illustrating an DFIG wind turbine and an operation of the wind turbine in a first operational mode in order to provide reactive power to a power grid according to an exemplary implementation.
Fig. 2 is a schematic drawing illustrating the DFIG wind turbine and an operation of the wind turbine in a second operational mode in order to provide reactive power to the power grid according to an exemplary implementation.
Fig. 3 is a schematic drawing illustrating the DFIG wind turbine and an operation of the wind turbine in a further operational mode in order to provide reactive power to the power grid according to an exemplary implementation.
Fig. 4 is a schematic drawing illustrating a state diagram that represents transitioning between operational modes in which the DFIG wind turbine is operated to provide reactive power according to an exemplary implementation.
Fig. 5 is a schematic flow diagram illustrating a method of operating a wind turbine according to an exemplary implementation.
Fig. 6 is a schematic diagram illustrating a respective reactive power capability of the DFIG wind turbine when a generator of the DFIG wind turbine is operated as variable-speed rotating condenser and when a power converter of the DFIG wind turbine is operated as a static synchronous compensator (STATCOM).

Fig. 7 is a schematic diagram illustrating a reactive power capability of the DFIG wind turbine when the generator of the DFIG wind turbine is operated as variable-speed rotating condenser and when in combination, the power converter of the DFIG wind turbine is operated as a static synchronous compensator (STATCOM).

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

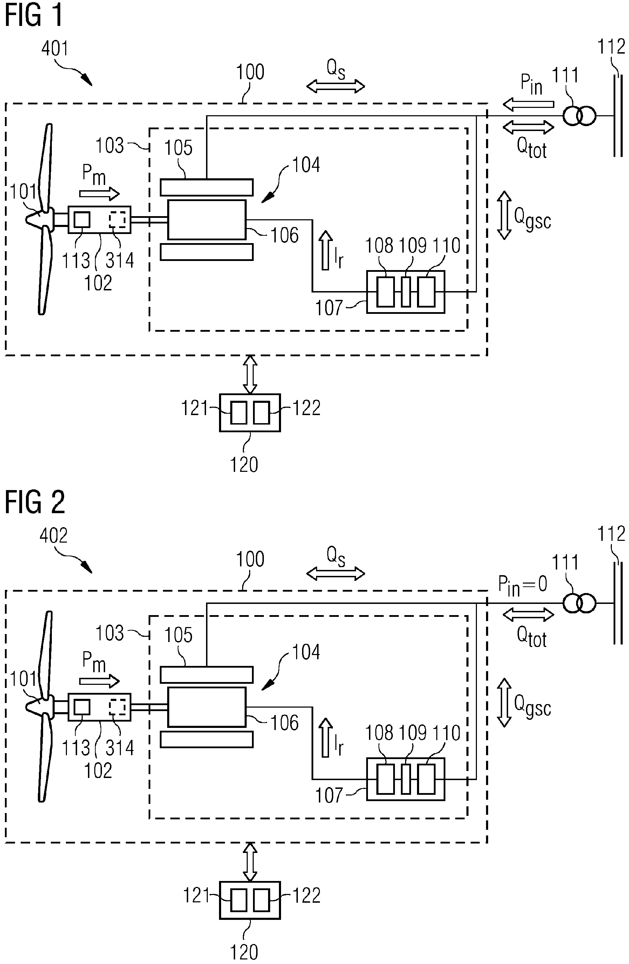

Figure 1 is a schematic drawing illustrating a DFIG wind turbine 100 and an operation of the wind turbine in a first operational mode 401 in order to provide (negative or positive) reactive power Qtot to a power grid 112 according to an exemplary implementation.

The operation of the wind turbine 100 in an operational mode described herein in order to provide reactive power may be performed when the wind turbine 100 is at a low active power generation operation, e.g., when the wind speed at the wind turbine 100 is below a cut-in wind speed and/or when the wind turbine is idle. The operation of the wind turbine 100 in each of the operational modes described herein may be controlled by control system 120 that may include a processing unit 121 and a memory unit 122.

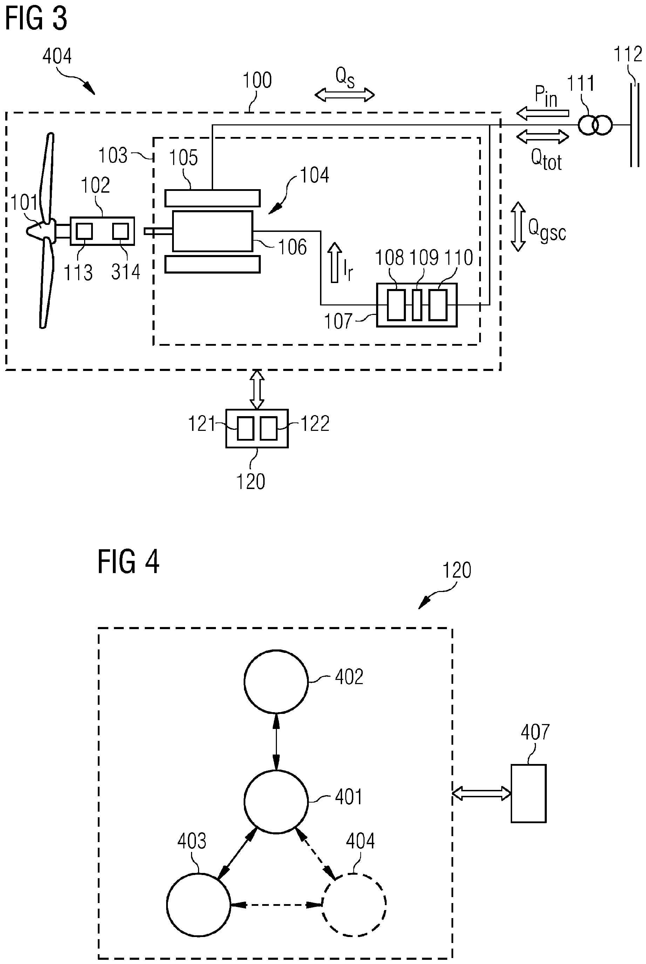

The wind turbine 100 may be controlled in each of the operational modes described herein such that active power is not delivered to the power grid 112, e.g. by setting an active power output reference of a power control of the wind turbine 100 to zero. In other words, in each of the operational modes described herein active power may either be consumed from the power grid 112 (e.g., in the first operational mode 401 shown in figure 1, in a third operational mode 403 (when an operation of a part of an electrical power system 103 of the wind turbine 100 is continued after stopping to provide reactive power), and in a different further (fourth) operational mode 404 shown in figure 3) or may not at all be exchanged with the power grid 112 (e.g., in a second operational mode 402 shown in figure 2 and in a third operational mode 403 (when the electrical power system does not continue with an operation to provide reactive power after the stopping)).

This contrasts with a conventional operation of a DFIG wind turbine in which the generator is used to provide active and reactive power to a power grid when the wind turbine is not idle and not at a low power generation operation, e.g., when the wind speed at the wind turbine is above a cut-in wind speed. In the conventional operation, active power is fed into/delivered to the power grid.

The wind turbine 100 may exchange reactive power with the power grid 112 upon receiving/obtaining a grid requirement to provide the reactive power Qtot to the power grid. The exchange of/providing the reactive power in accordance with the grid requirement by the electrical power system 103 may require the electrical power system 103 to consume an active power amount. The required active power amount may be provided in the operational modes 401, 402, 403, 404 differently, as herein described.

Referring again to figure 1, the wind turbine 100 may be electrically coupled via transformer 111 with the power grid 112. The wind turbine 100 may comprise a wind turbine rotor 101 that may be mechanically coupled via a drive train 102 including a gear box 113 (and optionally a clutch 314) with the electrical power system 103. The gear box 113 may convert a rotational speed and torque of the wind turbine rotor 101. The electrical power system 103 may comprise a power converter 107 and a doubly-fed induction generator 104. The generator 104 may include a stator 105 and a rotor 106.

The power converter 107 may comprise a rotor side converter 108, a DC link 109 and a grid side converter 110. The grid side converter 110 may be electrically coupled via the DC-link 109 with the rotor side converter 108 and the rotor side converter 108 may be electrically coupled with the rotor 105. The power converter 107 may be capable of bidirectionally transfer of electrical power from the rotor side to the grid side and from the grid side to the rotor side and may further be capable of imposing a voltage-controlled rotor current Ir on each phase of the rotor 105, the rotor current in each phase preferably being defined by a respective current magnitude, frequency and phase angle. An example for such power converter 107 may be a frequency changer and in particular an AC/DC-DC/AC converter.

The reactive power Qtot composed of a reactive power Qs provided by the stator 105 and of a reactive power Qgsc provided by grid side converter 110 may for example be provided to the power grid 112 in response to a grid requirement for the wind turbine 100 to exchange reactive power with the power grid 112. The grid requirement may be received from a grid operator. During the providing of the reactive power Qtot, the electrical power system 103 may be synchronized with the power grid 112 and may be energized.

The reactive power Qtot may be provided by operating the doubly-fed induction generator 104 as a variable-speed rotating condenser (DFI condenser), which is a reactive power compensator/dynamic phase shifter, and optionally by operating at least part of the converter 107, in particular the grid side converter 110 and the DC-link 109, as a static synchronous compensator (STATCOM). If the operation includes both the DFI condenser and the STATCOM, the providing of the reactive power Qtot may be shared between both in accordance with a respective maximum reactive power capability. Preferably, the respective maximum reactive power capability may be adjusted based on one or more operating conditions of the power converter and/or of the generator.

The condenser/compensator operation of the generator 104 may be synchronous or asynchronous with the power grid 112 (i.e., of variable-speed) in dependence on the rotational speed of the generator rotor 106 and the frequency of rotor current Ir. Since the DFI condenser operates at variable speed, the clutch 314 (indicated as optional by the dashed line) for decoupling the wind turbine rotor 101, e.g., to reduce mechanical stresses or to reduce drive train and rotor aerodynamical losses, may not be required.

The provision of (positive or negative) reactive power by the DFI condenser may be controlled by rotor current Ir, e.g., based on an under excitation or over excitation of the generator rotor 106. Controlling the rotor current Ir in generator rotor 106 may impose a stator voltage at stator 105, in response to which a current that lags grid voltage (i.e., inductive reactive power) or a current that leads grid voltage (i.e., capacitive power) may be output to the power grid 112.

Since the operation of the generator 104 as condenser may be controlled by power converter 107, in particular by the rotor-side converter 108, operational limits of the power converter 107 have to be considered.

For this purpose, the wind turbine rotor 101 may be controlled to rotate within a predetermined speed range, in particular at a predetermined fixed speed. The controlled speed of the wind turbine rotor 101 may be set to a value, at which the generator rotor 104 is rotated with a rotational speed that is so high that a voltage, in particular induced voltage, at the rotor side of power converter 107 is within an operational voltage limitation of the power converter 107.

The providing of the reactive power Qtot in accordance with the grid requirement by an electrical power system 103 may require the electrical power system 103 to consume an active power amount. The consumed active power amount may comprise active power that compensates losses that occur during the operation of the wind turbine 100 for reactive power provision, e.g., losses associated with the electrical power system 103, in particular associated with the generator 104 and/or the power converter 107, and/or losses associated with the drive train 102. Additionally or alternatively, the consumed active power amount may comprise active power that is required to control the rotational speed of the wind turbine rotor 101/the generator rotor 106 within the predetermined range and/or active power that is required to operate one or more ancillary systems of the wind turbine 100/of the wind turbine generator 104.

In the first operational mode 401, active power Pin may be consumed from the power grid 112, as indicated by the arrow that points towards wind turbine 100. The consumption of active power Pin is required in the first operational mode since the electrical power system 103 generates active power below an active power amount that has to be consumed by the electrical power system 103 to provide the reactive power in accordance with the grid requirement. This may be the case when wind turbine rotor 101 is driven by a wind speed that is not so high that the wind turbine rotor 101 provides sufficient mechanical power Pm to generator 104. In other words, in the first operational mode 401, the generator 104 may provide one part and the power grid 112 may provide the remaining part of the required active power amount.

When the remaining part of the required active power amount from the power grid 112 rises above a threshold, e.g., when the wind turbine 101 consumes a large amount of active power from power grid 112 in order to maintain the rotational speed of the wind turbine rotor 101 within the predetermined speed range, the wind turbine 100 may be stopped. It should however be clear that the operation of the wind turbine 100 after the stopping may be continued in the third operational mode 403. The third operational mode may comprise a provision of at least a part of the reactive power in accordance with the grid requirement by operating the power converter 107 as a STATCOM.

In an example, one or more rotor blade of the wind turbine 100 may be pitched (e.g. all rotor blades may be synchronously or simultaneously pitched to reduce the mechanical power Pm), by means of pitch control, when the wind turbine 100 provides or is capable of providing more active power than the required active power amount and upon receiving/obtaining a grid requirement not to provide active power to the power grid 112. This way, the amount of active power that is consumed from the power grid 112, e.g. for controlling the wind turbine not to provide the excess of active power to the power grid, may be reduced.

Figure 2 is a schematic drawing illustrating the DFIG wind turbine 100 and an operation of the wind turbine 100 in a second operational mode 402 in order to provide reactive power Qtot to the power grid 112 according to an exemplary implementation.

The second operational mode 402 differs from the first operational mode 401 in that the generator 104 may generate the total required active power amount to provide the reactive power in accordance with the grid requirement. In other words, when the wind turbine is operated in the second operational mode 402, the wind turbine rotor 101 may provide, due to sufficient high wind speed at the wind turbine 100, sufficient mechanical power Pm for the provision of the active power amount to the generator. Accordingly, no active power Pin is consumed (Pin=0).

Figure 3 is a schematic drawing illustrating the DFIG wind turbine 100 and an operation of the wind turbine 100 in a further operational mode 404 (fourth operational mode) in order to provide reactive power Qtot to the power grid 112 according to an exemplary implementation. The fourth operational mode may for example be performed during a total lack of wind speed at wind turbine 101. The wind turbine 100 shown in figure 3 differs from the wind turbine 100 shown in figures 1 and 2 in that the clutch 310 is no longer optional. When the wind turbine is operated in the fourth operational mode 404, the generator 104 is mechanically decoupled from the wind turbine rotor 101 and the drive train 102 (gearbox) and mechanically power Pm is not provided from the wind turbine rotor 101 to the generator 104. The rotation of the wind turbine rotor 101 may be stopped, e.g., by a (parking) break. Operating the wind turbine 100 in the fourth operational mode 404 may further differ from operational modes 401 and 402 in that the total required active power amount to provide the reactive power by operating the generator 104 as variable-speed rotating condenser and optionally by operating the converter 107 as STATCOM may be consumed from the power grid 112. In other words, the amount of consumed active power Pin from power grid 112 may be equal to the required active power amount.

It should be clear, that the required active power amount for the reactive power provision in the fourth operational mode 404 may be less than the required active power amount for the reactive power provision in the first or second operational mode 401, 402 since the wind turbine rotor 101 and the drive train 102 are decoupled. The required active power may be reduced in the fourth operational mode 404 since only the rotation of the generator rotor 106 is controlled to rotate within the predetermined speed range and since losses associated with the wind turbine rotor 101 and associated with the drive train 102 are no longer relevant.

After the decoupling, operating in the fourth operational mode 404 may comprise accelerating the generator rotor 106 to the desired rotational speed within the predetermined speed range in order to limit connection currents. The acceleration may be performed by a motor drive connected to a shaft of the generator 104 or by a voltage variator connected to the stator 105 and the generator rotor 106 being short-circuited through the rotor side converter 108 or by the rotor side converter 108 acting as a voltage variator connected to the rotor 104 and the generator stator 105 being short-circuited.

Figure 4 is a schematic drawing illustrating a state diagram that represents transitioning between the operational modes 401, 402, 403, 404 in which the DFIG wind turbine 100 is operated to provide reactive power according to an exemplary implementation. Operating the wind turbine 100 in each of the operating modes 401, 402, 403, 404 and the transitioning between the operational modes 401, 402, 403, 404 may be controlled by control unit 120. In the operational modes 401, 402, 404 the generator 104 may be operated as a variable-speed rotating condenser and optionally the power converter 107 may be operated as a STATCOM, as herein described. In operational mode 403, the wind turbine 100 may be stopped but the power converter 107 may be operated as the STATCOM. Operating the wind turbine 100 in the fourth operating mode 404 requires that the wind turbine 100 comprises clutch 314 while operating in the remaining operational modes 401, 402, 403 is independent on an existence of the clutch 314.

When the total active power amount required to provide the reactive power in accordance with the obtained grid requirement is generable/is generated by the generator 104 from rotational mechanical power provided by the wind turbine rotor 101 (i.e., when wind speed at the wind turbine 100 is high enough), the wind turbine 100 may be operated in operational mode 402. When at least a part of the active power amount has to be/is consumed from the power grid 112, the wind turbine 100 may be operated in the operational mode 401 or 403 or, when the wind turbine 100 comprises the clutch 314, in the operational mode 404 in dependence on the active power that has to be/is consumed from the power grid 112 and/or in dependence on the wind speed at wind turbine 100. For example, the operation of wind turbine 100 may be switched between operational modes 401, 403, 404 when the active power that has to be/is consumed from the power grid 112 and/or the wind speed exceeds respective thresholds.

In an example, a power efficiency and/or cost optimization unit 407 may adjust/modify the transitioning between the operational modes such that the wind turbine 100 is operated in the one operational mode of the operational modes in which the wind turbine 100 operates with most power efficiency and lowest costs. For this purpose, unit 407 may for example consider, e.g., by means of a respective model that implements an operation of the wind turbine 100 in the operational modes, the amount of active power that has to be/is consumed from the power grid 112 and/or a potential fine that has to be paid when the obtained grid requirement is not fulfilled.

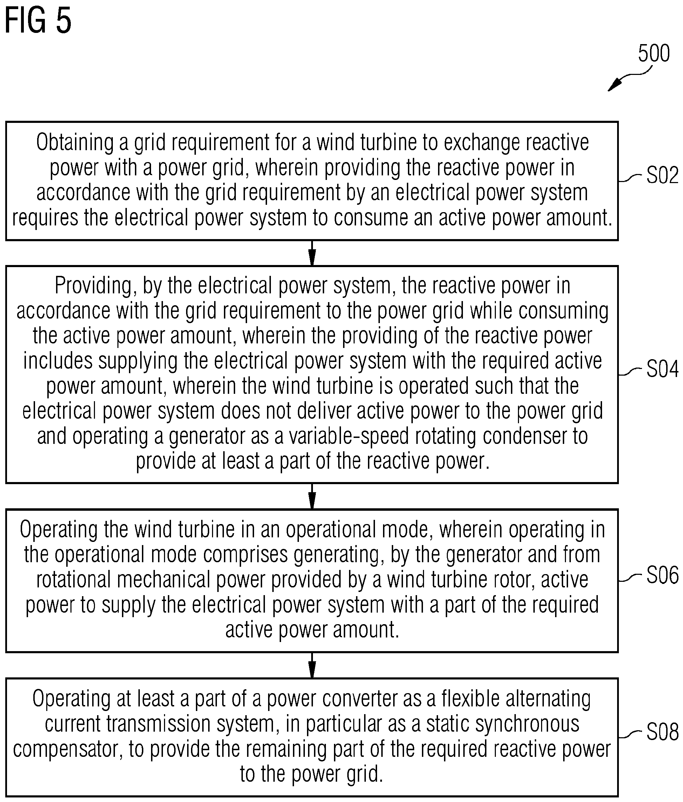

Figure 5 is a schematic flow diagram illustrating a method 500 of operating a wind turbine, e.g. the wind turbine 100, according to an exemplary implementation. The method may be performed by a control system, e.g., the control system 120.

The sequence of the method steps in figure 5 is not limited to the shown sequence. The method is further not limited to the shown number of steps. Certain steps of the method may not be carried out, may be replaced or extended. Further steps may be added.

The wind turbine may comprise a wind turbine rotor and an electrical power system including a doubly-fed induction generator mechanically coupled to the wind turbine rotor, wherein the electrical power system is configured to exchange electrical power with a power grid. The wind turbine rotor may be mechanically coupled with the generator via a drive train, the drive train comprising a gearbox. The electrical power system may comprise a power converter that is configured to convert the electrical power exchanged with the power grid.

According to a step S02 of method 500, the method may comprise obtaining a grid requirement for the wind turbine to exchange reactive power with the power grid, wherein providing the reactive power in accordance with the grid requirement by the electrical power system may require the electrical power system to consume an active power amount.

In a step S04 of method 500, the method may comprise providing, by the electrical power system, the reactive power in accordance with the grid requirement to the power grid while consuming the active power amount, wherein the providing of the reactive power may include supplying the electrical power system with the required active power amount, wherein the wind turbine may be operated such that the electrical power system does not deliver active power to the power grid. In particular, (at least) during the supply of the electrical power system with the required active power amount, active power is not delivered to the power grid by the wind turbine or the electrical power system. The providing of the reactive power may further include operating the generator as a variable-speed rotating condenser (doubly-fed induction compensator) to provide at least a part of the reactive power to the power grid.

In a step S06 of method 500, the method may comprise operating the wind turbine in an operational mode, wherein operating in the operational mode may comprise generating, by the generator and from rotational mechanical power provided by the wind turbine rotor, active power to supply the electrical power system with a part of the required active power amount.

In a step S08 of method 500, the method may comprise operating at least a part of the power converter as a flexible alternating current transmission system, in particular as a static synchronous compensator (STATCOM), to provide the remaining part of the required reactive power to the power grid.

Figure 6 is a schematic diagram illustrating a respective reactive power capability of the DFIG wind turbine when a generator of the DFIG wind turbine is operated as variable-speed rotating condenser and when a power converter of the DFIG wind turbine is operated as a static synchronous compensator (STATCOM).

The diagram includes a first graph 601 (solid line) illustrating a capability of the stator of the generator to provide reactive power in dependence on active power generated by the electrical power system when the generator is operated as the variable-speed rotating condenser/DFI condenser. The diagram further includes a second graph 602 (dashed line) illustrating a capability of a (grid side) converter included in the electrical power system to provide reactive power in dependence on active power generated by the electrical power system when the converter is operated in STATCOM mode. In figure 6, the dashed circles indicate the reactive power capability for each of the generator and the converter in a situation of low generated active power (e.g., due to a low wind situation), i.e., close to the abscissa of the diagram. It can be seen that in the area of the dashed circles, the capability of the generator in DFI condenser operation to provide negative (inductive) or positive (capacitive) reactive power is approximately three times of the capability of the converter in STATCOM operation to provide negative or positive reactive power.

Figure 7 is a schematic diagram illustrating a reactive power capability of the DFIG wind turbine when the generator of the DFIG wind turbine is operated as the variable-speed rotating condenser/DFI condenser and when in combination, the power converter of the DFIG wind turbine is operated as a static synchronous compensator (STATCOM).

The diagram includes a graph 701 illustrating the capability to provide reactive power in such operation in dependence on active power generated by the electrical power system. It can be seen in figure 7 that in the area of the dashed circles, the capability to provide negative or positive reactive power of the wind turbine is increased from approximately three times (as shown in figure 6) to approximately four times of the capability to provide negative or positive reactive power when only the converter is operated as a STATCOM.

While specific embodiments are disclosed herein, various changes and modifications can be made without departing from the scope of the invention. The present embodiments are to be considered in all respects as illustrative and nonrestrictive, and all changes coming within the meaning and equivalency range of the appended claims are intended to be embraced therein.

## Claims

1. A method of operating a wind turbine, wherein the wind turbine (100) comprises a wind turbine rotor (101) and an electrical power system (103) including a doubly-fed induction generator (104) mechanically coupled to the wind turbine rotor, wherein the electrical power system is configured to exchange electrical power with a power grid (112), wherein the method comprises:
- obtaining a grid requirement for the wind turbine (100) to exchange reactive power with the power grid (112), wherein providing the reactive power in accordance with the grid requirement by the electrical power system (103) requires the electrical power system to consume an active power amount; and
- providing, by the electrical power system (103), the reactive power in accordance with the grid requirement to the power grid (112) while consuming the active power amount, wherein the providing of the reactive power includes
supplying the electrical power system (103) with the required active power amount, wherein the wind turbine (100) is operated such that the electrical power system does not deliver active power to the power grid (112), and
operating the generator (104) as a variable-speed rotating condenser to provide at least a part of the reactive power to the power grid (112).

2. The method of claim 1, wherein the reactive power in accordance with the grid requirement is provided when a wind speed at the wind turbine (100) is below a cut-in wind speed of the wind turbine (100) or close to the cut-in wind speed, wherein the wind-speed is close to the cut-in wind speed when the wind speed differs from the cut-in wind speed below 10, 5 or 3 percent of the cut-in wind speed.

3. The method of claim 1 or 2, wherein the active power amount comprises an amount of active power that is required to compensate electrical power that is dissipated when the providing of the required reactive power is performed, wherein preferably, the electrical power is at least dissipated by the electrical power system (103), in particular by the generator (104) and/or by a power converter (107) of the electrical power system, and/or during rotation of the wind turbine rotor (101), in particular by a mechanical drive train (102) that mechanically couples the wind turbine rotor with the electrical power system, and/or by one or more ancillary systems of the wind turbine (100).

4. The method of any of the preceding claims, wherein the electrical power system (103) comprises a power converter (107) that is configured to convert the electrical power exchanged with the power grid (112) and wherein the generator (104) operated as the condenser provides a part of the reactive power, wherein the method comprises
operating at least a part of the power converter (104) as a flexible alternating current transmission system, in particular as a static synchronous compensator, STATCOM, to provide at least a part of the reactive power to the power grid (112) or to provide the remaining part of the required reactive power to the power grid (112).

5. The method of any of the preceding claims, wherein the electrical power system (103) comprises a power converter (107) that is configured to convert the electrical power exchanged with the power grid (112) and wherein the exchanged reactive power is provided by both the generator (104) and the power converter (107) in accordance with a respective maximum reactive power capability, wherein preferably, the respective maximum reactive power capability is adjusted based on one or more operating conditions of the generator (104) and/or of the power converter (107).

6. The method of any of the preceding claims, wherein the method comprises operating the wind turbine (100) in an operational mode (401, 402), wherein operating in the operational mode comprises:
- generating, by the generator (104) and from rotational mechanical power provided by the wind turbine rotor (101), active power to supply the electrical power system (103) with at least a part of the required active power amount.

7. The method of claim 6, wherein operating in the operational mode (401, 402) comprises controlling a rotational speed of the wind turbine rotor (101) or of a generator rotor (106) of the generator (104) such that the wind turbine rotor or the generator rotor (106) rotates at a speed within a predetermined speed range,
wherein preferably, the electrical power system (103) comprises a power converter (107) that is configured to convert the electrical power exchanged with the power grid (112) and wherein the predetermined speed range is set such that a voltage at the power converter (107) is within an operational voltage range of the power converter,
wherein more preferably, the speed range comprises a lower limit that causes the generator rotor (106) to rotate above 50 percent of a synchronous rotational speed of the generator (104) and/or the speed range may comprise an upper limit that causes the generator rotor to rotate below 160 percent of the synchronous rotational speed of the generator.

8. The method of claim 6 or 7, wherein the operational mode is a first operational mode (401) in which the generator (104) generates a part of the required active power amount, and wherein operating the wind turbine (100) in the first operational mode further comprises
supplying the remaining part of the required active power amount to the electrical power system (103) from the power grid (112),
wherein the wind turbine (100) is preferably further operable in a second operational mode (402) in which the generator (104) generates the total required active power amount.

9. The method of claim 8, wherein operating the wind turbine (100) in the first operational mode (401) further comprises:
stopping the operation of the wind turbine (100) in the first operational mode (401) if the consumption of the remaining part of the required active power amount from the power grid (112) rises above a respective threshold and/or if a monitored parameter indicative of wind speed at the wind turbine (100) falls below a respective threshold.

10. The method of claim 8 or 9, wherein the wind turbine (100) comprises a clutch (314) configured to mechanically decouple the wind turbine rotor (101) and/or a drive train (102) that is arranged between the wind turbine rotor (101) and the generator (104) from the generator, wherein operating the wind turbine in the first operational mode (401) further comprises:
- decoupling the wind turbine rotor (101) and/or the drive train (102) from the generator if the consumption of the remaining part of the required active power amount from the power grid (112) rises above a respective threshold and/or if a monitored parameter indicative of wind speed at the wind turbine (100) falls below a respective threshold; and
after the decoupling, continuing the operation of the wind turbine (100) in a further different operational mode (404) in which the power grid (112) supplies the electrical power system (113) with the total required active power amount.

11. The method of claim 10, wherein operating in the further different operational mode (404) comprises
accelerating a generator rotor (106) of the generator (104) to a predetermined rotational speed.

12. The method of any of claims 6-11, wherein operating in the operational mode comprises receiving at least a part of the active power amount from the power grid, wherein the method further comprises:
- upon detecting that an operation of the wind turbine (100) in a different further operational mode (404) requires less consumption of active power from the power grid (112) in order to provide the reactive power to the power grid, switching from the operational mode (401) to the further operational mode (404),
wherein preferably the detection is based on one or more monitored parameters, wherein particularly the one or more parameters comprise a parameter indicative of wind speed at the wind turbine (100), and/or wherein the detection is based on an estimation of the required consumption of active power from the power grid (112) in the different further operational mode (404), the estimation being in particular performed by employing a model that implements the operation of the wind turbine (100) in the different further operational mode (404) .

13. The method of any of the preceding claims, wherein the method comprises
upon detecting that the wind turbine (100) provides or is capable of providing more active power than the required active power amount, pitching one or more rotor blades of the wind turbine rotor (101),
wherein preferably, the detection is based on a monitored parameter that is indicative of at least one of a wind speed at the wind turbine (100), a rotational speed of the wind turbine rotor and/or of a generator rotor of the generator, a voltage of the wind turbine (100) and a current of the wind turbine (100).

14. A control system for controlling an operation of a wind turbine, wherein the wind turbine (100) comprises a wind turbine rotor (101) and an electrical power system (103) including a doubly-fed induction generator (104) mechanically coupled to the wind turbine rotor (101), wherein the electrical power system (103) is configured to exchange electrical power with a power grid (112), wherein the control system (120) is configured to perform a method according to any of claims 1-12.

15. A computer program for controlling an operation of a wind turbine, wherein the computer program comprises control instructions which, when executed by a processing unit (121) of a control system (120) controlling the operation of the wind turbine (100), cause the processing unit to perform the method according to any of claims 1-12.
